# EUROPÄISCHE PATENTANMELDUNG

(11) **EP 1 887 154 A2**
(43) Veröffentlichungstag der Anmeldung: **13.02.2008**
(21) Anmeldenummer: 07015344.0
(22) Anmeldetag: 06.08.2007
(51) Int. Cl.: E04B 1/08

(54) **Vakuumisolationspaneel mit Durchführung im Dämmstoffstützkörper**

(30) Priorität: 12.08.2006 DE 202006012469 U
(71) Anmelder: Porextherm-Dämmstoffe GmbH, 87437 Kempten (DE)
(72) Erfinder: Eberhardt, Hans-Frieder, 89537 Giengen / Brenz-Burgberg (DE)
(74) Vertreter: Fiener, Josef

(57) **Zusammenfassung**

Zur Schaffung einer kostengünstigen und einfachen, diffusionsdichten Durchführung (20) in einem Vakuumisolationspaneel mit einem Dämmstoffstützkörper (14) in einer vakuumdichten Folienumhüllung (17), wobei zur Bildung der Durchführung (20) im Dämmstoffstützkörper (14) eine Buchse (30) mit einem Buchsenzentrum (33) vorgesehen ist, die stirnseitig je ein erstes (31) und ein zweites Buchsenende (32) aufweist, wird vorgeschlagen, dass am ersten Buchsenende (31) ein sich radial vom Buchsenzentrum (33) weg erstreckender erster (37) und am zweiten Buchsenende (32) ein sich radial zum Buchsenzentrum (33) hin erstreckender zweiter Bund (39) angeordnet ist, wobei die Bünde (37, 39) über axial im Buchseninneren (36) verlaufende, sich zum Buchsenzentrum (33) hin erstreckende Stege (40) verbunden sind und die vakuumdichte Folienumhüllung (17) mit beiden Bünden (37, 39) verschweißt ist.

## Beschreibung

Die Erfindung betrifft ein Vakuumisolationspaneel mit den oberbegrifflichen Merkmalen des Anspruchs 1.

Vakuumisolationspaneele, meist auf Basis von feindispersem Siliziumdioxid (pyrogen erzeugter Kieselsäure oder gefällter. Kieselsäure) oder Aerogelen dienen in verschiedenen Anwendungen zur Reduzierung der Wärmeleitung, die durch ein hohes Vakuum unterstützt wird. Wegen ihrer Leistungsfähigkeit eröffnen Vakuumisolationspaneele eine Vielzahl von Anwendungsmöglichkeiten auch im Baubereich, z. B. bei der Fassadenisolierung. Ebenso kann durch den Einbau von Vakuumisolationspaneelen beispielsweise eine längere Transportzeit bei Kühltransporten oder eine Verringerung der Abmessungen isolierter Frachtbehälter erreicht werden.

Ein Vakuumisolationspaneel (VIP) besteht in der Regel aus einem von einer vakuumdichten Schutzfolie umhüllten Dämmstoffkern. Nach Einbringen das Kerns in die Folienumhüllung wird das Paneel evakuiert und versiegelt. Das Kernmaterial dient dabei zum Stützen der Paneelwände. Zudem hemmt es die Bewegung eventuell in der Platte noch vorhandener Gasmoleküle und bildet eine Sperrschicht gegen Wärmeübertragung durch Strahlung, Insbesondere durch Trübungsmittel, um die Infrarotstrahlung zu zerstreuen oder zu absorbieren. Die Dämmwirkung von Vakuumisolationspaneelen wird nicht unerheblich durch Randeffekte an den Siegelnähten der den Dämmstoffkern umhüllenden Folie(-n) beeinflusst. Derartige Randeffekte treten auch an den Ausnehmungen in den Vakuumisolationspaneelen auf. Solche Ausnehmungen in den Vakuumisolationspaneelen sind beispielsweise gerade im Baubereich notwendig als Durchführungen für Leitungen, Rohre oder Befestigungsmittel.

Um derartige Durchführungen in Vakuumisolationspaneelen zu bilden, ist beispielsweise aus der US 2005/0053755 ein Verfahren bekannt, bei dem die Ober- mit der Unterfolie der Folienumhüllung des Vakuumisolationspaneels in der Ausnehmung direkt verschweißt wird. Nachteil der Bildung einer derartigen Durchführung ist es, dass neben einer zusätzlich im Bereich der Durchführung eingebrachten Siegelnaht, an der die bereits genannten Randeffekte auftreten, der Bereich der Durchführung weitgehend ungedämmt bleibt. Zudem ist ein Vakuumisolationspaneel mit derartigen Durchführungen auch anfällig für mechanische Beschädigungen.

Die JP 8312880 schlägt eine zweigeteilte, randbildende Buchse vor, deren Teile in entsprechend ausgeformte Ausnehmungen auf beiden Seiten des Vakuumisolationspaneels eingesetzt und mit der umhüllenden Folie verschweißt werden. Da es sich bei dieser Lösung nicht um eine durchgehende Buchse handelt, sind hier große Isolationsverluste zu erwarten. Zudem erzeugt die möglichst passgenaue Ausformung der Ausnehmungen einen erhöhten Zeit- und damit Kostenbedarf bei der Herstellung entsprechender Vakuumisolationspaneele.

Aufgabe der vorliegenden Erfindung ist es daher, eine kostengünstige, einfach zu realisierende und diffusionsdichte Durchführung in einem Vakuumisolationspaneel zu schaffen.

Diese Aufgabe wird durch ein Vakuumisolationspaneel gemäß Anspruch 1 gelöst. Vorteilhafte Ausgestaltungen sind Gegenstand der abhängigen Ansprüche.

Das erfindungsgemäße Vokuumisolationspaneel weist einen in seiner Hauptfläche eine Durchführung aufweisenden Dämmstoffstützkörper in einer vakuumdichten Folienumhüllung auf, wobei zur Bildung einer Durchführung im Dämmstoffstützkörper eine Buchse vorgesehen ist. Die Buchse weist dabei stirnseitig ein erstes und ein zweites Buchsenende und ein axial in der Buchse verlaufendes Buchsenzentrum auf. Das Vakuumisolationspaneel ist dadurch gekennzeichnet, dass am ersten Buchsenende ein sich radial vom Buchsenzentrum weg erstreckender erster Bund vorgesehen ist. Zudem ist am zweiten Buchsenende ein sich radial zum Buchsenzentrum hin erstreckender zweiter Bund angeordnet, wobei diese über axial im Buchseninneren verlaufende Stege verbunden sind und die vakuumdichte Folienumhüllung mit beiden Bünden verschweißt ist.

Durch diese Ausgestaltung mit entgegengesetzt ausgerichteten Bundflächen oder Kragen an der jeweiligen Stirnseite ist es möglich, die Buchse in eine Ausnehmung, die als Durchführung im Dämmstoffstützkörper eines Vakuumisolationspaneels eingebracht ist, einfach einzusetzen oder einzustecken und in einer Hauptfläche des Dämmstoffstutzkörpers einen glatten Abschluss zwischen dem zweiten Bund und der Hauptfläche zu erzielen. Demgegenüber liegt der erste Bund der Buchse auf der Hauptfläche des Dämmstoffstutzkörpers auf und verhindert somit eine weitere Verschiebung bzw. ein Durchrutschen der Buchse durch die Ausnehmung im Dämmstoffstützkörpers. Nach dem Einsetzen der Buchse wird der Dämmstoffstützkörper mit einer vakuumdichten Folienumhüllung versehen. Die vakuumdichte Folienumhüllung wird evakuiert und anschließend an den Rändern durch eine Siegelnaht verschlossen. Im Zuge der Versiegelung wird die Folienumhüllung mit den Bünden der Buchse verschweißt und somit eine vakuumdichte Durchführung durch das Vakuumisolationspaneel geschaffen. Die somit zwischen der Umhüllung sicher verankerte Buchse weist in der Regel eine relativ geringe Materialstärke auf, um Isolationsverluste durch Festkörperleitung möglichst niedrig zu halten. Um den ersten Bund und um die gesamte Buchse zu stabilisieren, sind die Bünde der Buchse dabei Über axial im Buchseninneren verlaufende Stege verbunden. Die Stege erstrecken sich zudem radial zum Buchsenzentrum hin, um ein Durchtriftsloch für Schrauben, Nägel, Kabel usw. zu umgrenzen.

Eine weitere bevorzugte Ausführungsform der vorliegenden Erfindung sieht vor, dass die Stege das Buchseninnere in gleichmäßige Segmente aufteilen, so dass ein axiales Durchgangsloch gebildet wird. Zusätzlich kann auch vorgesehen werden, dass die freien Enden der Stege so verbunden sind, dass innerhalb der Buchse eine weitere konzentrische Buchse mit geringerem Durchmesser entsteht.

Durch diese Ausgestaltung der Buchse erhalten durch die Buchse hindurchgeführte Objekte, wie beispielsweise Leitungen, Rohre oder Befestigungsmittel, eine verbesserte Führung und werden zusätzlich in der Buchse zentriert. Die Freiräume zwischen den Stegen können beispielsweise nach der Montage der Vakuumisolationspaneele auf der Baustelle mittels Polyurethanschaum oder anderer Dämmmaterialien ausgefüllt werden, um so die Isolation zu verbessern. Zusätzlich können die Stege so ausgebildet sein, dass im Bereich der Bünde Senkungen gebildet werden, die entsprechende Schrauben- oder Nägelköpfe aufnehmen, wodurch die Schaffung einer glatten Oberfläche der Vakuumisolationspaneele möglich wird.

Um Isolationsverluste durch die Buchse möglichst gering zu halten, weist diese vorteilhafterweise auf ihrer dem Dämmstoffstützkörper zugewandten Außenseite eine diffusionsdichte Beschichtung auf. Eine weitere Verbesserung der diffusionshemmenden Eigenschaften der Buchse tritt ein, wenn zusätzlich auch die Innenseite mit einer entsprechenden Beschichtung versehen ist. Eine derartige Beschichtung empfiehlt sich besonders bei Verwendung der erfindungsgemäßen Buchse in Ausnehmungen mit großem Durchmesser, da hier aufgrund der vergrößerten Randfläche, eine erhöhte Diffusion stattfindet.

Als besonders empfehlenswert wird angesehen, wenn die Beschichtung aus metallischen und/oder anorganischen Schichten gebildet ist, die auf die dem Dämmstoffstützkörper zugewandten Außenseite und/oder der dieser Außenseite gegenüberliegenden Innenseite der Buchse aufgedampft sind. Metallische Schichten können beispielsweise aus Aluminium gebildet werden, wohingegen anorganische Schichten beispielsweise aus auf die entsprechende(n) Seite(n) der Buchse aufgedampftern SiOₓ bestehen. Die Schaffung der Schichten kann über geeigneten Depositionsverfahren durchgeführt werden.

Bevorzugt besteht die Buchse aus Kunststoff, Hierfür geeignet sind verschiedene thermoplastische Kunststoffe, wie beispielsweise HDPE und PP sowie verschiedene Copolymere oder Polyester. Darüber hinaus kann die Buchse allerdings auch aus einem wasserdampfdichteren Material wie Polyamid bestehen, wobei es dann allerdings empfehlenswert ist, die Bünde mit einem thermisch verformbaren Material zu beschichten, um eine vakuumdichte Verschweißung zwischen den kragenförmigen Bünden und der Folienumhüllung des Vakuumisolationspaneels zu gewährleisten. Die Buchse kann mittels mechanischer oder thermischer Verfahren hergestellt werden. Als besonders geeignet werden hierfür Spritzgussverfahren angesehen, da die Buchse mit Hilfe dieser Verfahren in Art eines Dübels besonders dünnwandig produziert werden kann.

Weitere Vorteile, Merkmale und Besonderheiten der Erfindung ergeben sich aus der nachfolgenden Beschreibung bevorzugter, jedoch nicht beschränkender Ausführungsformen der Erfindung anhand der schematischen und nicht maßstabsgetreuen Zeichnungen. Es zeigen:

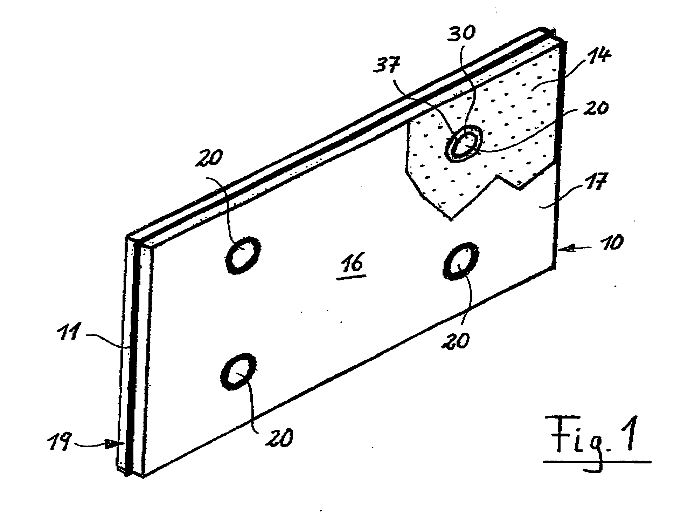

- Fig. 1: ein erfindungsgemäßes Vakuumisolationspaneel in perspektivischer Ansicht,
- Fig. 2: eine Schnittdarstellung einer eine Durchführung In einem Vakuumisolationspaneel bildenden Buchse, und
- Fig. 3: die eine Durchführung bildende Buchse gemäß Fig. 2 in Draufsicht.

Fig,1 1 zeigt ein erfindungsgemäßes Vakuumisolationspaneel 10 in perspektivischer Ansicht. Das Vakuumisoiationspaneel 10 besteht aus einem Dämmstoffstützkörper 14 mit vakuumdichter Folienumhüllung 17 und weist hier z. B. vier Durchführungen 20 auf. Der hier rechte obere Teil des Vakuumisolationspaneels 10 wurde ohne die vakuumdichte Folienumhüllung 17 gezeichnet, so dass der aus einem mikroporösen Material bestehende Dämmstoffstützkörper 14 sowie ein erster Bund 37 der Buchse 30 zu erkennen sind, die eine der Durchführungen 20 bildet, Der Dämmstützkötper 14 kann aus pyrogener oder gefällter Kieselsäure, einem Aerogel, offenzelligem PU- oder PS-Schaum, offenzelligem Polylsocyanuratschaum und Fasermateralien sowie Kombinationen von verschiedenen offenzelligen oder mikro-/nanoporösen Materialien bestehen. Das Vakuumisolationspaneel 10 wird nach Anbringen der vakuumdichten Folienumhüllung 17 evakuiert und die vakuumdichte Folienumhüllung 17 anschließend verschweißt. Dadurch wird eine umlaufende Siegelnaht 11 im Randbereich 19 des Vakuumisolationspaneels 10 erzeugt und zusätzlich eine Schweißverbindung zwischen den kragenförmigen Bünden 37, 39 der Buchsen 30 erstellt. Anstatt zweier Folien kann auch ein Folienbeutel verwendet werden, wie auf dem Gebiet der VIP-Herstellung gebräuchlich.

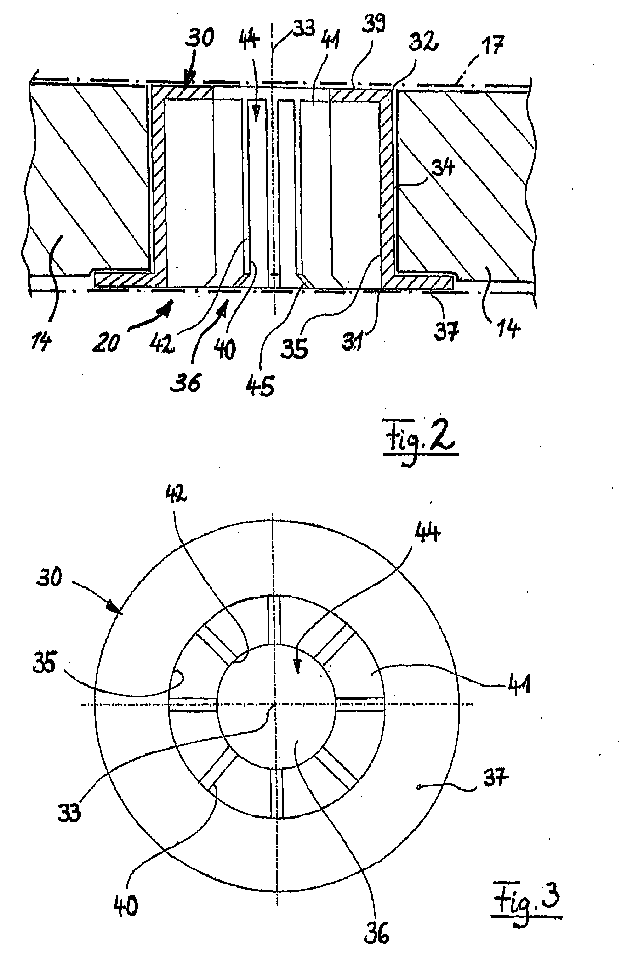

Im Ausführungsbeispiel der Fig. 2 sind die Durchführungen von der vakuumdichten Folienumhüllung 17 bedeckt, die beim Einbau bzw. sonstigem Bedarf im freien, zentralen Bereich der Buchse 30 durchstoßen, aufgeschnitten oder ausgestanzt werden kann. Das Vakuumisolationspaneel 10 bleibt davon unberührt, d,h. das Vakuum wird nicht zerstört, da die vakuumdichte Folienumhüllung 17 gasdicht mit den Bünden 37, 39 verschweißt ist. Über die Durchführungen 20 kann das Vokuumisolationspaneel 10 mittels Schrauben, Nieten o.ä. Verbindungsmitteln an einer zu isolierenden Fläche (nicht dargestellt) befestigt werden, ebenso können allerdings auch Leitungen o.ä, über diese Durchführungen 20 von der Hauptfläche (Flachseite) 16 weg durch das Vakuumisoiationspaneel 10 hindurchgeführt werden. Die durchgeführten Objekte können ebenso wie etwaig vorhandene, nicht verwendete Durchführungen 20 nachträglich mit Dämmschäumen o.ä. ausgefüllt bzw. eingebettet werden, um Diffusionsverluste an den Durchführungen 20 noch weiter zu verringern,

Die Buchse 30, die in Fig. 2 dargestellt ist, verfügt über ein erstes, hier unteres Buchsenende 31, an dem ein sich radial vom Buchsenzentrum 33 weg erstreckender erster Bund 37 angeformt ist. Gegenüber dem ersten Buchsenende 31 befindet sich das zweite, hier obere Buchsenende 32. Der an diesem zweiten Buchsenende 32 angeordnete zweite Bund 39 erstreckt sich vom zweiten Buchsenende 32 aus radial zum Buchsenzentrum 33 hin, also entgegengesetzt ausgerichtet zum ersten Bund 37. Vom zweiten Bund 39 aus erstrecken sich axial zum Buchsenzentrum 33 verlaufende Stege 40 in Richtung des ersten Bundes 37. Die Stege 40 sind dabei sternförmig um das Buchsenzentrum 33 angeordnet. Im Bereich des ersten Buchsenende 31 weisen die Stege 40 Anschrägungen auf, die insgesamt eine Senkung 45 bilden, die beispielsweise eine zur Montage des Vakuumisolationspaneels 10 verwendete Senkkopfschraube oder andere geeignete Befestigungselemente aufnehmen kann. Die Ausnehmungen können an die Form des jeweils verwendeten Befestigungselements angepasst werden und erlauben somit die Montage des Vakuumisolationspaneels 10 ohne über das Vakuumisolationspaneel 10 überstehende Köpfe der Befestigungselemente.

Die Außenseite 34 der Buchse 30 ist bevorzugt mit einer diffusionsdichten Beschichtung versehen, die einen Isolationsverlust In den Randflächen der Durchführungen 20 durch das Vokuumisolationspaneel 10 wirkungsvoll verhindert. Auch die Innenseite 35 der Buchse 30 kann eine entsprechende Beschichtung aufweisen, um die Isolationseigenschaften nochmals zu verbessern. Die Zwischenräume 41 zwischen den Stegen 40 können zur Verbesserung der Isolierung nach dem Einführen eines Befestigungselementes in die Buchse 30 mit wärmedämmenden Materialien wie z.B. PU-Schaum ausgefüllt werden.

Fig. 3 zeigt die Durchführung 20 in einem Vakuumisolationspaneel 10 mit der Buchse 30 in Draufsicht auf den ersten Bund 37. Dargestellt ist der sich radial vom Buchsenzentrum 33 weg erstreckende erste Bund 37, der am ersten Buchsenende 31 angeordnet ist. Dieser erste Bund 37 liegt auf dem Dämmstoffstützkörper 14 des erfindungsgemäßen Vakuumisolationspaneel 10 (vgl. Fig. 2) auf und wird nach Evakuierung des Vakuumisolationspaneel 10 mit der vakuumdichten Folienumhüllung 17 verschweißt.

Das Buchseninnere 36 wird in Fig. 3 durch die Stege 40, die sich radial in das Buchseninnere 36 erstrecken, segmentiert. Die von der Buchseninnenseite 35 abgewandten Enden 42 der Stege 40 bilden so ein Durchgangsloch 44 für durch die Buchse 30 hindurchgeführte Objekte, wie beispielsweise Befestigungsmittel für das Vakuumisolationspaneel 10, Kabel oder Leitungen. Das Durchgangsloch 44 ermöglicht gleichzeitig eine Zentrierung der Objekte in der Buchse 30. Die Zwischenräume 41 zwischen den Stegen 40 können zur Verbesserung der Isolierung nach dem Einführen eines Befestigungselementes o.ä. in das Durchgangsloch 44 noch mit wärmedämmenden Materialien wie z.B. PU-Schaum ausgefüllt werden.

### Bezugszeichenliste:

- 10 =: Vakuumisolationspaneel
- 11 =: Siegelnaht
- 14 =: Dämmstoffstützkörper (Kern)
- 16 =: Hauptfläche (Flachseite)
- 17 =: vakuumdichte Folienumhüllung
- 19 =: Randbereich
- 20 =: Durchführung
- 30 =: Buchse
- 31 =: erstes Buchsenende
- 32 =: zweites Buchsenende
- 33 =: Buchsenzentrum
- 34 =: Außenseite
- 35 =: Innenseite
- 36 =: Buchseninneres
- 37 =: erster Bund
- 39 =: zweiter Bund
- 40 =: Steg
- 41 =: Zwischenraum
- 42 =: Enden
- 44 =: Durchgangsloch
- 45 =: Senkung

## Patentansprüche

1. Vakuumisolationspaneel (10) mit einem in seiner Hauptfläche eine Durchführung (20) aufweisenden Dämmstoffstützkörper (14) in einer vakuumdichten Follenumhüllung (17), wobei zur Bildung der Durchführung (20) im Dämmstoffstützkörper (14) eine Buchse (30) mit einem Buchsenzentrum (33) vorgesehen ist, die stirnseitig je ein erstes (31) und ein zweites Buchsenende (32) aufweist,
**dadurch gekennzeichnet, dass**
am ersten Buchsenende (31) ein sich radial vom Buchsenzentrum (33) weg erstreckender erster (37) und am zweiten Buchsenende (32) ein sich radial zum Buchsenzentrum (33) hin erstreckender zweiter Bund (39) angeordnet ist, wobei die Bünde (37, 39) aber axial im Buchseninneren (36) verlaufende, sich zum Buchsenzentrum (33) hin erstreckende Stege (40) verbunden sind und die vakuumdichte Follenumhüllung (17) mit beiden Bünden (37, 39) verschweißt ist.

2. Vakuumisolationspaneel nach Anspruch 1,
**dadurch gekennzeichnet, dass**
die Stege (40) das Innere der Buchse (30) in gleichmäßige Segmente aufteilen und ein axial verlaufendes Durchgangsloch (44) bilden.

3. Vakuumisolationspaneel nach einem der vorhergehenden Ansprüche,
**dadurch gekennzeichnet, dass**
der erste Bund (37) sich zusätzlich radial zum Buchsenzentrum (33) hin erstreckt.

4. Vakuumisolationspeneel nach einem der vorhergehenden Ansprüche,
**dadurch gekennzeichnet, dass**
die Buchse (30) an ihrer Außenseite (34) und/oder Innenseite (35) eine diffusionsdichte Beschichtung aufweist.

5. Vakuumisolationspaneel nach Anspruch 4,
**dadurch gekennzeichnet, dass**
die Beschichtung aus metallischen und/oder anorganischen auf die Außenseite (34) und/oder Innenseite (35) der Buchse (30) aufgedampften Schichten gebildet ist.

6. Vakuumisolationspaneel nach einem der vorhergehenden Ansprüche,
**dadurch gekennzeichnet, dass**
die Buchse (30) aus einem Kunststoffmaterial, insbesondere einem thermoplastischen Kunststoff oder Polyamid, besteht,

7. Vakuumisolationspaneel nach Anspruch 1 oder 2,
**dadurch gekennzeichnet, dass**
die Stege (40) an einer Stirnseite, insbesondere an der mit dem ersten Bund (37) eine Anschrägung oder Senkung (45) aufweisen,
